# EUROPEAN PATENT APPLICATION

(11) **EP 3 018 246 A1**
(43) Date of publication of application: **11.05.2016**
(21) Application number: 14819722.1
(22) Date of filing: 02.06.2014
(51) Int. Cl.: D04H 1/64, D04H 1/4218, D06M 15/55, H01B 1/06, H01M 8/02

(54) **REINFORCING MATERIAL FOR PROTON-CONDUCTING FILM, PROTON-CONDUCTING FILM COMPRISING SAME, AND SOLID POLYMER FUEL CELL**

(30) Priority: 01.07.2013 JP 2013138187
(71) Applicant: Nippon Sheet Glass Company, Limited, Tokyo 108-6321 (JP)
(72) Inventor: TOYOSHIMA, Takayuki, Tokyo 108-6321 (JP); SEKIGUCHI, Yukinari, Tokyo 108-6321 (JP); TSUDA, Masanobu, Tokyo 108-6321 (JP)
(74) Representative: Körfer, Thomas
(86) International application number: PCT/JP2014/002907
(87) International publication number: WO 2015/001707

(57) **Abstract**

[Problem] To provide a reinforcement for a proton conductive membrane, which can improve the acid resistance and dimension stability.

[Means for Resolution] A reinforcement which is formed from a glass fiber nonwoven fabric for use in a proton conductive membrane having an arylene group, wherein the reinforcement uses a resin binder containing an arylene group as a binding component for glass fibers constituting the glass fiber nonwoven fabric.

## Description

### Technical Field

The present invention relates to a reinforcement for a proton conductive membrane, and a proton conductive membrane comprising the same and a solid polymer fuel cell.

### Background Art

With respect to a solid polymer electrolyte used in a fuel cell, particularly in a solid polymer fuel cell, for improving the dimension stability and the like, a solidpolymer electrolyte in a composite form obtained by impregnating a porous substrate with an electrolyte has been proposed (for example, PTL 1). Conventionally, as a material for the porous substrate, various materials have been proposed, and, as one of the materials, from the viewpoint of the chemical durability and heat resistance, the use of a glass fiber nonwoven fabric has been proposed (for example, PTL 2).

However, even when using the glass fiber nonwoven fabric, the resultant substrate was not always preferred as an electrolyte composite membrane for fuel cell, and was likely to be unsatisfactory in the chemical durability required for the solid polymer fuel cell.

Specifically, the inside of an electrolyte of a fuel cell being operated becomes a strongly acidic atmosphere, and therefore it is important for the electrolyte composite membrane to have an acid resistance. However, even when using glass fibers having an acid resistance, the resultant electrolyte composite membrane was not always satisfactory. Further, the electrolyte composite membrane formed using glass fibers was unlikely to secure the required dimension stability.

### Citation List

### Patent Literature

PTL 1: JP-A-2010-232158
PTL 2: JP-A-2012-252915

### Summary of Invention

### Technical Problem

In view of the above, the present invention has been made, and an object of the invention is to provide a reinforcement for a proton conductive membrane, which can improve the acid resistance and dimension stability, and a proton conductive membrane comprising the same and a solid polymer fuel cell.

### Solution to Problem

The present inventors have conducted extensive and intensive studies. As a result, they have found the following means for solution.

Specifically, the reinforcement for a proton conductive membrane of the invention is a reinforcement for a proton conductive membrane, which comprises a glass fiber nonwoven fabric, wherein the reinforcement uses a resin binder containing an arylene group as a binding component for glass fibers constituting the glass fiber nonwoven fabric.

The proton conductive membrane of the invention has a polymer solid electrolyte reinforced by the above-mentioned reinforcement for a proton conductive membrane.

Further, the solid polymer fuel cell of the invention comprises the above-mentioned proton conductive membrane.

### Advantageous Effects of Invention

In the invention, there can be provided a reinforcement for a proton conductive membrane, which can improve the acid resistance and dimension stability, and a proton conductive membrane comprising the same and a solid polymer fuel cell.

### Description of Embodiments

The reinforcement for a proton conductive membrane of the invention is a reinforcement for a proton conductive membrane, which comprises a glass fiber nonwoven fabric, and uses a resin binder containing an arylene group as a binding component for glass fibers constituting the glass fiber nonwoven fabric.

In the reinforcement for a proton conductive membrane, a resin binder containing an arylene group is used as a binding component for the glass fibers, and therefore the adhesion to the electrolyte can be improved, so that an aim to protect the glass fiber nonwoven fabric from an acidic atmosphere during the operation of a solid polymer fuel cell can be achieved.

Specifically, for forming a fuel cell electrolyte which is more resistant to the deterioration during the operation of a solid polymer fuel cell and exhibits high dimension stability, extensive and intensive studies have been made on the properties of a glass fiber nonwoven fabric. As a result, it has been found that, by using a reinforcement having excellent wettability with the electrolyte and having an acid resistance and a chemical resistance, the adhesion of the reinforcement to the electrolyte is further improved, so that the reinforcement can improve the electrolyte in acid resistance and dimension stability.

The resin binder is applied to a glass fiber nonwoven fabric or a glass fiber nonwoven fabric is immersed in the resin binder so that the resin binder covers the entire surface of the nonwoven fabric. With respect to the amount of the resin binder applied (or in which the fabric is immersed), the binder weight is desirably 5 to 50%, based on the total weight of the glass fiber nonwoven fabric after the binder is applied. When the binder weight is more than 50%, there is a danger that the collective conduction properties of the electrolyte become poor. On the other hand, when the binder weight is less than 5%, there is a danger that satisfactory acid resistance and dimension stability cannot be obtained.

With respect to the glass fiber nonwoven fabric, there is no particular limitation as long as it finally secures the acid resistance required for the reinforcement for a proton conductive membrane. Preferably, taking into consideration high acid resistance required for the glass fiber nonwoven fabric, preferred is a nonwoven fabric formed from glass fibers having a relatively high acid resistance, such as so-called C glass fibers or silica fibers.

The resin binder is a resin binder (organic resin binder) which has in the structure thereof an arylene group so as to have a structure having an affinity with an electrolyte having in the structure thereof an arylene group or a functional group similar to an arylene group. As examples of the resins having an arylene group in the structure thereof, there can be generally mentioned an epoxy resin and a polyester resin. Examples of epoxy resins include those of a bisphenol A type, a bisphenol F type, and a phenolic novolak type, and especially preferred is a bisphenol A epoxy resin. Examples of polyester resins include polyethylene terephthalate, polytrimethylene terephthalate, and polybutylene terephthalate, and especially preferred is polyethylene terephthalate.

Further, the proton conductive membrane of the invention has a polymer solid electrolyte reinforced by the above-mentioned reinforcement for a proton conductive membrane.

As the solid electrolyte, any proton conductive solid electrolyte having in the structure thereof an arylene group or a functional group similar to an arylene group can be used without a problem. Particularly, a hydrocarbon solid electrolyte is preferred, and, specifically, a sulfonated styrene-ethylene copolymer solution or the like can be used.

Further, the solid polymer fuel cell of the invention comprises the above-mentioned proton conductive membrane.

### Examples

Hereinbelow, Examples of the present invention will be described.

### (Example 1)

Using C glass fibers (diameter: about 0.6 µm; average length: 200 µm) having an acid resistance, a glass fiber nonwoven fabric (thickness: about 40 µm) having a grammage of 5.0 g/m² was prepared.

Subsequently, an epoxy resin binder coating mixture using a bisphenol A epoxy resin containing an arylene group (base resin: DT-206, manufactured by Daito Sangyo Co., Ltd.; curing agent: X-7024, manufactured by Daito Sangyo Co., Ltd.) was prepared, and the above nonwoven fabric was impregnated with the prepared coating mixture and air-dried. Then, the resultant nonwoven fabric was subjected to calcination at 150°C for 10 minutes to prepare a glass fiber nonwoven fabric with a predetermined binder. A ratio of the weight of the binder to the total weight of the glass fiber nonwoven fabric after the binder was applied (hereinafter, referred to as "deposition ratio") was 5%.

For evaluating the durability (acid resistance) in an operating atmosphere of a solid polymer fuel cell, in terms of a weight loss ratio of the glass fiber nonwoven fabric with a binder, the above-prepared glass fiber nonwoven fabric with a binder was subjected to acid resistance test by immersing the fabric in 1 N sulfuric acid at 90°C for 24 hours. As a result, the weight loss ratio was 3.1% as shown in Table 1, which indicates that the glass fiber nonwoven fabric with a binder exhibited high acid resistance.

Then, using the glass fiber nonwoven fabric with a binder, a composite membrane presumed to be used in a solid polymer fuel cell was prepared. In the present Example, for forming a base material which is a solid polymer electrolyte, a sulfonated styrene-ethylene copolymer solution (manufactured by Sigma-Aldrich Japan K.K.) was dissolved in a mixed solvent of N-methyl-2-pyrrolidone (NMP) and methanol in a 60 : 40 volume ratio. The glass fiber nonwoven fabric with a binder was impregnated with the resultant solution and dried at 120°C for one hour. Further, the resultant glass fiber nonwoven fabric with a binder was immersed in pure water at room temperature for 10 hours to remove NMP, preparing a composite membrane. The content of the solid electrolyte in the prepared composite membrane was 70% by weight.

For the purpose of evaluating the dimension stability in an operating atmosphere of a solid polymer fuel cell, the above-prepared composite membrane was subjected to wetting test by immersing the membrane in pure water at 80°C for 24 hours. A dimensional change ratio of the composite membrane before and after the test was 1.7% as shown in Table 1, and the composite membrane exhibited a low dimensional change ratio. A dimensional change ratio was obtained by measuring lengths in apredeterminedplanar direction of the composite membrane before the test and the composite membrane after the test and determining a ratio between the measured lengths. A positive dimensional change ratio indicates that a length of the composite membrane after the test is larger than a length of the composite membrane before the test.

### (Example 2)

A glass fiber nonwoven fabric with a binder was prepared in substantially the same manner as in Example 1 except that the solids content of the epoxy resin binder coating mixture was changed so that the deposition ratio became 10%. The prepared glass fiber nonwoven fabric with a binder was subjected to acid resistance test in the same manner as in Example 1. As shown in Table 1, the weight loss ratio was 2.4%, which indicates that the glass fiber nonwoven fabric with a binder exhibited high acid resistance.

Then, using the glass fiber nonwoven fabric with a binder in Example 2, a composite membrane was prepared in the same manner as in Example 1. The prepared composite membrane was subjected to wetting test in the same manner as in Example 1. A dimensional change ratio of the composite membrane before and after the test was 1.4% as shown in Table 1, and the composite membrane exhibited a low dimensional change ratio.

### (Example 3)

A glass fiber nonwoven fabric with a binder was prepared in substantially the same manner as in Example 1 except that the solids content of the epoxy resin binder coating mixture was changed so that the deposition ratio became 30%. The prepared glass fiber nonwoven fabric with a binder was subjected to acid resistance test in the same manner as in Example 1. As shown in Table 1, the weight loss ratio was 1.5%, which indicates that the glass fiber nonwoven fabric with a binder exhibited high acid resistance.

Then, using the glass fiber nonwoven fabric with a binder in Example 3, a composite membrane was prepared in the same manner as in Example 1. The prepared composite membrane was subjected to wetting test in the same manner as in Example 1. A dimensional change ratio of the composite membrane before and after the test was 1.4% as shown in Table 1, and the composite membrane exhibited a low dimensional change ratio.

### (Example 4)

A glass fiber nonwoven fabric with a binder was prepared in substantially the same manner as in Example 1 except that the solids content of the epoxy resin binder coating mixture was changed so that the deposition ratio became 50%. The prepared glass fiber nonwoven fabric with a binder was subjected to acid resistance test in the same manner as in Example 1. As shown in Table 1, the weight loss ratio was 1.4%, which indicates that the glass fiber nonwoven fabric with a binder exhibited high acid resistance.

Then, using the glass fiber nonwoven fabric with a binder in Example 4, a composite membrane was prepared in the same manner as in Example 1. The prepared composite membrane was subjected to wetting test in the same manner as in Example 1. A dimensional change ratio of the composite membrane before and after the test was 0.9% as shown in Table 1, and the composite membrane exhibited a low dimensional change ratio.

### (Example 5)

A glass fiber nonwoven fabric with a binder was prepared in substantially the same manner as in Example 1 except that the type of the resin binder coating mixture was changed to a bisphenol F epoxy resin containing an arylene group (base resin: EXA-830CRP, manufactured by DIC Corporation; curing agent: WN-155). The binder deposition ratio was 30%. The prepared glass fiber nonwoven fabric with a binder was subjected to acid resistance test in the same manner as in Example 1. As shown in Table 1, the weight loss ratio was 1.8%, which indicates that the glass fiber nonwoven fabric with a binder exhibited high acid resistance.

Then, using the glass fiber nonwoven fabric with a binder in Example 5, a composite membrane was prepared in the same manner as in Example 1. The prepared composite membrane was subjected to wetting test in the same manner as in Example 1. A dimensional change ratio of the composite membrane before and after the test was 1.7% as shown in Table 1, and the composite membrane exhibited a low dimensional change ratio.

### (Example 6)

A glass fiber nonwoven fabric with a binder was prepared in substantially the same manner as in Example 1 except that the type of the resin binder coating mixture was changed to a polyethylene terephthalate resin containing an arylene group (MD-1480, manufactured by TOYOBO CO., LTD.), and that the calcination temperature was changed to 120°C. The binder deposition ratio was 30%. The prepared glass fiber nonwoven fabric with a binder was subjected to acid resistance test in the same manner as in Example 1. As shown in Table 1, the weight loss ratio was 2.6%, which indicates that the glass fiber nonwoven fabric with a binder exhibited high acid resistance.

Then, using the glass fiber nonwoven fabric with a binder in Example 6, a composite membrane was prepared in the same manner as in Example 1. The prepared composite membrane was subjected to wetting test in the same manner as in Example 1. A dimensional change ratio of the composite membrane before and after the test was 2.0% as shown in Table 1, and the composite membrane exhibited a low dimensional change ratio.

### (Comparative Example 1)

Using C glass fibers (diameter: about 0.6 µm; average length: 200 µm) having an acid resistance, a glass fiber nonwoven fabric (thickness: about 40 µm) having a grammage of 5.0 g/m² was prepared.

Subsequently, a binder coating mixture was prepared using a silicone urethane resin containing no arylene group (TAKELAC WS-6021) so that the solids content became a predetermined ratio, and the above nonwoven fabric was impregnated with the prepared coating mixture and air-dried. Then, the resultant nonwoven fabric was subjected to calcination at 120°C for 10 minutes to prepare a glass fiber nonwoven fabric with a predetermined binder. The binder deposition ratio was 30%.

The prepared glass fiber nonwoven fabric with a binder was subjected to acid resistance test in the same manner as in Example 1. As shown in Table 1, the weight loss ratio was 1.2%, which indicates that the glass fiber nonwoven fabric with a binder exhibited high acid resistance.

Then, using the glass fiber nonwoven fabric with a binder in Comparative Example 1, a composite membrane was prepared in the same manner as in Example 1. The prepared composite membrane was subjected to wetting test in the same manner as in Example 1. A dimensional change ratio of the composite membrane before and after the test was 4.4% as shown in Table 1. That is, in Comparative Example 1, the glass fiber nonwoven fabric with a binder had a certain acid resistance, but the composite membrane could not achieve satisfactory dimensional change properties.

The reason for this is presumed that NMP used in forming the composite membrane causes the binder to deteriorate, making it impossible to maintain the dimension stability.

### (Comparative Example 2)

A glass fiber nonwoven fabric with a binder was prepared in substantially the same manner as in Example 1 except that a binder coating mixture using a multifunctional aliphatic epoxy resin containing no arylene group (base resin: EX-212, manufactured by Nagase Chemtex Corporation) was prepared. The binder deposition ratio was 30%. The prepared glass fiber nonwoven fabric with a binder was subjected to acid resistance test in the same manner as in Example 1. As shown in Table 1, the weight loss ratio was 1.4%, which indicates that the glass fiber nonwoven fabric with a binder exhibited high acid resistance.

Then, using the glass fiber nonwoven fabric with a binder in Comparative Example 2, a composite membrane was prepared in the same manner as in Example 1. The prepared composite membrane was subjected to wetting test in the same manner as in Example 1. A dimensional change ratio of the composite membrane before and after the test was 3.7% as shown in Table 1. That is, in Comparative Example 2, the glass fiber nonwoven fabric with a binder had a certain acid resistance, but the composite membrane could not achieve satisfactory dimensional change properties.

The reason for this was closely studied, and it was confirmed that very small peeling occurred at the interface between the binder and the electrolyte during the wetting test, and the peeling is presumed to have caused the unsatisfactory dimensional stability.

### (Comparative Example 3)

Using C composition glass fibers (diameter: about 0.6 µm; average length: 200 µm) having an acid resistance, a glass fiber nonwoven fabric (thickness: about 40 µm) having a grammage of 5.0 g/m² was prepared (no binder).

The prepared glass fiber nonwoven fabric was subjected to acid resistance test in the same manner as in Example 1. As shown in Table 1, the weight loss ratio was as high as 5.5%, which indicates that the glass fiber nonwoven fabric could not achieve satisfactory (high) acid resistance.

Then, using the glass fiber nonwoven fabric in Comparative Example 3, a composite membrane was prepared in the same manner as in Example 1. The prepared composite membrane was subjected to wetting test in the same manner as in Example 1. A dimensional change ratio of the composite membrane before and after the test was 4.7% as shown in Table 1. That is, in Comparative Example 3, the glass fiber nonwoven fabric could not achieve satisfactory acid resistance, and further the composite membrane could not achieve satisfactory dimension stability.

### (Comparative Example 4)

A sulfonated styrene-ethylene copolymer solution (manufactured by Sigma-Aldrich Japan K.K.) was dissolved in a mixed solvent of NMP and methanol in a 60:40 volume ratio. The resultant solution was applied onto a PET film and dried at 120°C for one hour. Further, the resultant PET film was immersed in pure water at room temperature for 10 hours to remove the NMP, obtaining an electrolyte membrane which is not in a composite form with a glass fiber nonwoven fabric.

The obtained electrolyte membrane was subj ected to wetting test in the same manner as in Example 1. A dimensional change ratio before and after the test was 10.5% as shown in Table 1, which indicates that the electrolyte membrane could not achieve satisfactory dimension stability.

**[Table 1]**

| | Type of binder | Deposition ratio (Weight ratio) | Weight loss ratio (Acid resistance test) | Dimensional change ratio (Wetting test) |
|---|---|---|---|---|
| Example 1 | Bisphenol A epoxy resin (containing an arylene group) | 5% | 3.1% | 1.7% |
| Example 2 | Bisphenol A epoxy resin (containing an arylene group) | 10% | 2.4% | 1.4% |
| Example 3 | Bisphenol A epoxy resin (containing an arylene group) | 30% | 1.5% | 1.4% |
| Example 4 | Bisphenol A epoxy resin (containing an arylene group) | 50% | 1.4% | 0.9% |
| Example 5 | Bisphenol F epoxy resin (containing an arylene group) | 30% | 1.8% | 1.7% |
| Example 6 | Polyethylene terephthalate resin (containing an arylene group) | 30% | 2.6% | 2.0% |
| Comparative Example 1 | Silicone urethane resin (containing no arylene group) | 30% | 1.2% | 4.4% |
| Comparative Example 2 | Epoxy resin (containing no arylene group) | 30% | 1.4% | 3.7% |
| Comparative Example 3 | None | - | 5.5% | 4.7% |
| Comparative Example 4 | (No reinforcement) | - | - | 10.5% |

As is apparent from the results of the Examples and Comparative Examples above, in Examples 1 to 6 in the present embodiment, satisfactory acid resistance and dimension stability were obtained. On the other hand, when a resin containing an arylene group was not used in the binder for the glass fiber nonwoven fabric as a reinforcement, or when no reinforcement was used, satisfactory acid resistance and dimension stability were not obtained.

## Claims

1. A reinforcement for a proton conductive membrane, the reinforcement comprising a glass fiber nonwoven fabric for use in a proton conductive membrane having an arylene group, wherein the reinforcement uses a resin binder containing an arylene group as a binding component for glass fibers constituting the glass fiber nonwoven fabric.

2. The reinforcement for a proton conductive membrane according to claim 1, wherein the resin is an epoxy resin or a polyester resin.

3. The reinforcement for a proton conductive membrane according to claim 2, wherein the epoxy resin is a bisphenol A epoxy resin or a bisphenol F epoxy resin.

4. The reinforcement for a proton conductive membrane according to claim 2, wherein the polyester resin is polyethylene terephthalate.

5. The reinforcement for a proton conductive membrane according to any one of claims 1 to 4, wherein the resin binder is applied to the glass fiber nonwoven fabric or the glass fiber nonwoven fabric is immersed in the resin binder, wherein the amount of the resin binder is 5 to 50% by weight, based on the total weight of the glass fiber nonwoven fabric after the binder is applied.

6. The reinforcement for a proton conductive membrane according to any one of claims 1 to 5, wherein the glass fiber nonwoven fabric is C glass fibers.

7. A proton conductive membrane having a polymer solid electrolyte reinforced by the reinforcement for a proton conductive membrane according to any one of claims 1 to 6.

8. The proton conductive membrane according to claim 7, wherein the solidelectrolyteis a hydrocarbon solidelectrolyte.

9. The proton conductive membrane according to claim 8, wherein the hydrocarbon solid electrolyte is formed from a material containing a sulfonated styrene-ethylene copolymer solution.

10. A solid polymer fuel cell comprising the proton conductive membrane according to any one of claims 7 to 9.
